# EUROPÄISCHE PATENTSCHRIFT

(11) **EP 0 787 449 B1**
(45) Veröffentlichungstag und Bekanntmachung des Hinweises auf die Patenterteilung: **06.02.2002**
(21) Anmeldenummer: 96120732.1
(22) Anmeldetag: 21.12.1996
(51) Int. Cl.: A47B 96/02, A47B 96/14

(54) **Fachboden für Lager- oder Kommissionierregale**
Base for stockage or selection shelf
Base pour étagère de stockage ou de sélection

(30) Priorität: 03.02.1996 DE 29601819 U
(43) Veröffentlichungstag der Anmeldung: 06.08.1997
(73) Patentinhaber: NEDCON MAGAZIJNINRICHTING B.V., NL-7000 AA Doetinchem (NL)
(72) Erfinder: Hollander, Rudolf Richard, 7251 KC Vorden (NL)
(74) Vertreter: Stenger, Watzke & Ring Patentanwälte

(56) Entgegenhaltungen:
- GB-A- 1 604 232
- GB-A- 2 236 242
- US-A- 3 986 462
- US-A- 5 199 582

## Beschreibung

Die Erfindung betrifft einen Fachboden für Lager- oder Kommissionierregale, bestehend aus horizontalen Traversen, an denen Auflagen für parallel zueinander angeordnete, vorzugsweise aus Metall bestehende Profile ausgebildet sind, die gleichartig gestaltet sind mit jeweils mindestens zwei in einer gemeinsamen Ebene angeordneten Auflageflächen sowie einem zwischen den Auflageflächen angeordneten und diesen gegenüber abgesenkten Kanal, der entlang seines tiefstgelegenen Querschnitts mit regelmäßig verteilten Öffnungen versehen ist.

Bei Fachbodenregalen wird aus brandschutztechnischen Gründen zunehmend verlangt, die einzelnen Fachböden mit Öffnungen zu versehen, damit im Brandfall das Wasser einer Sprinkleranlage durch die Öffnungen hindurch abfließen kann. Gemäß neuerer behördlicher Bestimmungen müssen die Regalböden zu mindestens 50 % mit Öffnungen versehen sein. Diesen brandschutztechnischen Anforderungen genügen z. B. Regalböden, die aus Gitterrosten aufgebaut sind. Gitterroste sind jedoch relativ teuer in der Herstellung, und erschweren zudem wegen der scharfkantigen Stege das Verschieben der darauf abgelegten Waren.

Ein Fachboden mit diesen Merkmalen ist aus der GB-A-1 604 232 bekannt. Dieser ist in ein Regal, bestehend aus horizontalen Traversen, einlegbar, wobei die Enden der Fachböden auf Stufen aufliegen, die an den Traversen ausgebildet sind. Jeder Fachboden weist zwei in einer gemeinsamen Ebene angeordnete Auflageflächen auf sowie einen zwischen diesen Auflageflächen angeordneten Kanal. Dieser Kanal übernimmt die Versteifung des Fachbodens gegenüber den darauf ruhenden Lasten.

Aus der US-A-5,199,582 sind Trapezflächen für Lagerzwecke bekannt, bei denen am Boden der Rinnen der Trapezfläche jeweils in regelmäßigen Abständen Öffnungen vorgesehen sind, durch die im Fall eines Brandes das Wasser der Sprinkleranlage ablaufen kann.

Aus der US-A-3,986,462 sind Lagerregale bekannt, deren Lagerflächen aus relativ schmalen Lochblechen bestehen. Die Lochbleche sind entlang ihrer Längsseiten mit nach unten gerichteten Abwinklungen versehen, wobei das regelmäßige Lochmuster auch den Bereich dieser Abwinklungen erfaßt. Die Lagerflächen weisen hierdurch zwar eine sehr große Durchlässigkeit auf, andererseits dürfte aber die Festigkeit der einzelnen Platten nicht ausreichen, um auch schwere Lasten aufzunehmen.

Der Erfindung liegt die **Aufgabe** zugrunde, einen brandschutztechnischen Anforderungen genügenden und preisgünstig herstellbaren Fachboden zu schaffen, der sich für hohe Traglasten eignet, und auf dem sich Waren mit relativ geringem Reibwiderstand verschieben lassen.

Zur **Lösung** wird bei einem Fachboden der eingangs genannten Art vorgeschlagen, daß zumindest eine der beiden Auflageflächen zweigeteilt mit einer dazwischen angeordneten Einsenkung geformt ist, und die Einsenkung entlang ihres Bodens mit Öffnungen versehen ist, wobei die Einsenkung eine relativ geringe Tiefe hat, die ein Viertel der Höhe des Profils nicht übersteigt.

Bei einem solchen Fachboden ist im Brandfall ein Abströmen des Löschwassers nicht nur über den Kanal, sondern zusätzlich auch über Öffnungen in der Einsenkung möglich, so daß sich die als Lasttragflächen dienenden Auflageflächen selbst weitgehend eben gestalten lassen, wodurch sich wiederum die auf den Lasttragflächen aufliegenden Waren mit relativ geringem Reibwiderstand verschieben lassen. Der Fachboden ist durch mehrfaches Abkanten eines Profils mit geringem Aufwand herstellbar, und verfügt infolge des abgesenkten Kanals über ein hohes Maß an Verwindungssteifheit.

Gemäß einer bevorzugten Weiterbildung des Fachbodens befinden sich zusätzliche Öffnungen in Seitenwänden des Kanals, wobei diese Seitenwände den tiefstgelegenen Querschnitt des Kanals mit den Auflageflächen verbinden. Auf diese Weise werden zusätzliche Durchschnittsquerschnitte zum Abströmen des in den Kanal gelangenden Löschwassers geschaffen. Femer wird es möglich, daß die summierten Durchtrittsflächen von Öffnungen und zusätzlichen Öffnungen vorzugsweise mindestens 50 % jener Fläche betragen, die der Kanal, in Draufsicht betrachtet, einnimmt. Auf diese Weise wird ein Fachboden geschaffen, der einen sehr hohen Anteil an Wasserdurchtrittsflächen aufweist, ohne daß unter dem damit einhergehenden Materialverzicht die Festigkeit des Fachbodens in nennenswerter Weise leidet.

Die Festigkeit des Fachbodens gegen Biegekräfte läßt sich dadurch zusätzlich verbessern, daß der Kanal im Querschnitt rechteckig gestaltet ist, und sich die Öffnungen im Boden des Kanals, und die zusätzlichen Öffnungen in den vertikalen Seitenwänden des Kanals befinden. Für die Festigkeit des Fachbodens ist ferner von Vorteil, wenn die im wesentlichen rechtwinkligen Übergänge zwischen dem Boden des Kanals und dessen Seitenwänden frei von Öffnungen sind. Die rechtwinkligen Übergänge sind für die Steifheit des Profils von besonderer Bedeutung und werden daher bei dieser Ausgestaltung nicht durch Durchtrittsöffnungen geschwächt.

Vorzugsweise beträgt die Breite des Kanals 20 bis 33 % der Breite des Profils. Bei Einhaltung dieser Größenverhältnisse wird ein optimales Verhältnis zwischen der für ein leichtes Verschieben der Waren erforderlichen Auflagefläche und der Durchtrittsfläche für Löschwasser im Brandfall erzielt.

In der Regel erfolgt die Herstellung der Öffnungen durch Ausstanzen der entsprechenden Flächen mittels eines Stanzwerkzeuges. Hierbei ergeben sich scharfkantige Grate, die, sofern sie sich im Bereich der Auflageflächen befinden, zu einer Erhöhung des Reibwiderstandes führen. Zur Vermeidung dieses Nachteils wird vorgeschlagen, daß die Auflageflächen, mit Ausnahme der Einsenkung, keine Öffnungen aufweisen.

Im Rahmen der Herstellung des Fachbodens ist es schließlich von Vorteil, wenn sämtliche Öffnungen dieselbe Länge aufweisen und sich, in axialer Richtung betrachtet, abschnittsweise auf derselben Höhe erstrecken.

Weitere Einzelheiten und Vorteile der Erfindung werden nachfolgend anhand eines auf der Zeichnung dargestellten Ausführungsbeispieles erläutert. Auf der Zeichnung zeigen:
- Fig. 1: in einer perspektivischen Darstellung einen Fachboden mit zwei Traversen, zwischen denen Profile eingesetzt sind, wobei aus Gründen der Übersichtlichkeit nur ein Profil dargestellt ist;

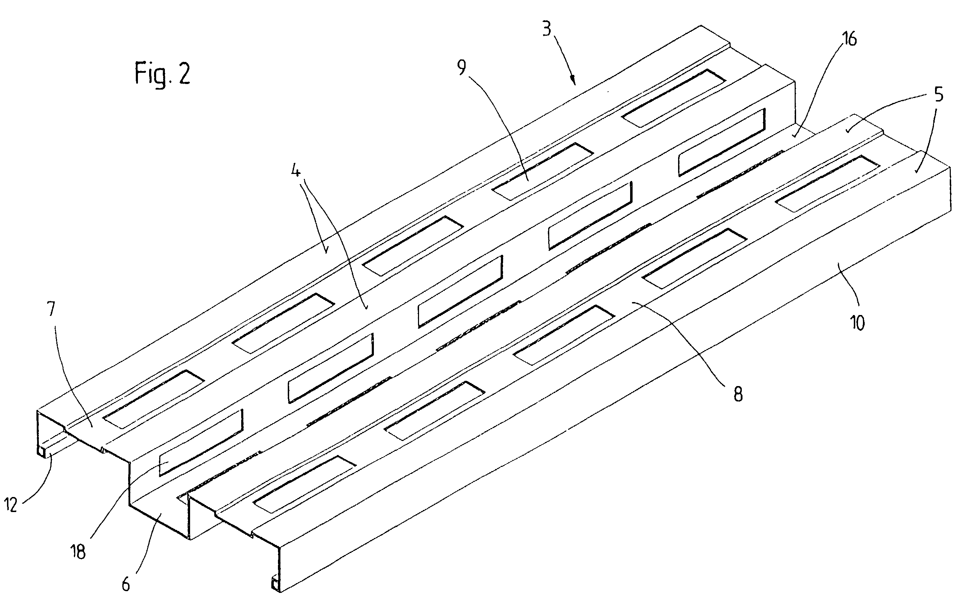

- Fig. 2: das Profil nach Fig. 1 in einer perspektivischen Einzeldarstellung und

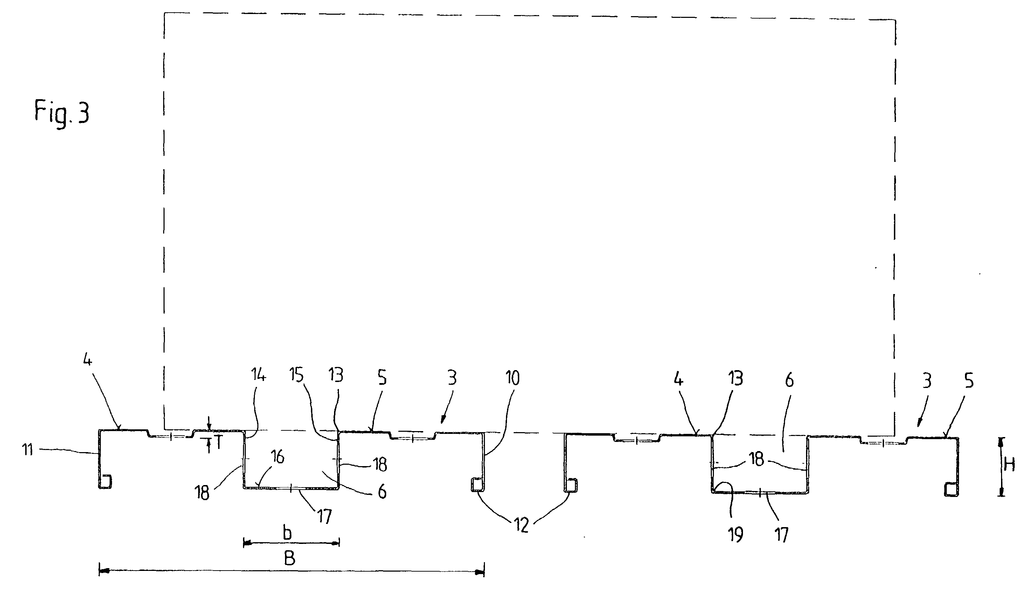

- Fig. 3: in einer Schnittdarstellung zwei nebeneinander angeordnete Profile des Fachbodens.

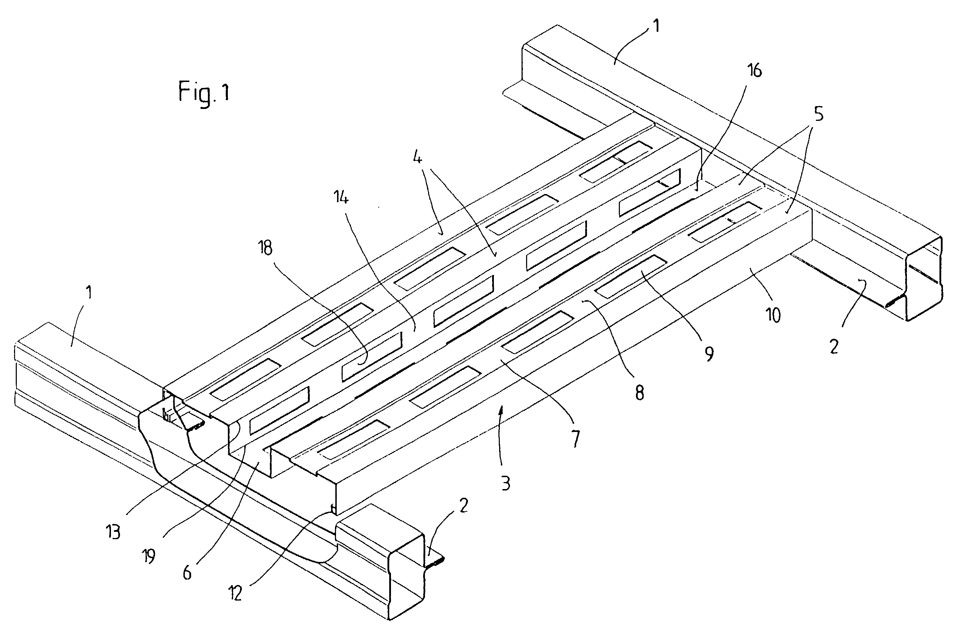

Der auf der Zeichnung dargestellte Fachboden ist Bestandteil eines vorzugsweise mehrstöckigen Fachbodenregals, an dessen vertikalen Stützen paarweise angeordnete, horizontale Traversen 1 befestigt sind. An ihren einander zugewandten Seiten sind die Traversen 1 mit Auflagen 2 versehen, auf denen Profile 3 mit ihren Enden aufliegen. Die einzelnen Profile 3 sind gleichartig aufgebaut, und erstrecken sich parallel zueinander zwischen den beiden Traversen 1, wobei Distanzelemente die jeweils benachbarten Profile 3 auf der gewünschten Distanz halten. Aus Gründen der Übersichtlichkeit ist in Fig. 1 lediglich ein Profil 3 eingezeichnet.

Die einstückigen Profile 3 bestehen aus einem mehrfach abgekanteten Blech, welches vorzugsweise verzinkt ist. Das Profil 3 setzt sich im großen und ganzen aus drei Bereichen zusammen: einer ersten Auflagefläche 4, einer zweiten Auflagefläche 5, sowie einem dazwischen angeordneten Kanal 6. Die im wesentlichen eben gestalteten Auflageflächen 4 bilden die Warenauflage des Fachbodens. Jede der beiden Auflageflächen 4, 5 ist durch eine in Längsrichtung verlaufende Einsenkung 7 nochmals in zwei gleichgroße Einzelflächen unterteilt. Die Einsenkung 7 hat eine relativ geringe Tiefe T, die ein Viertel der Höhe H des Profils 3 nicht übersteigt. Entlang des Bodens 8 der durchgehenden Einsenkung 7 befinden sich Öffnungen 9, durch die hindurch Wasser von den Auflageflächen 4, 5 abfließen kann.

Die Auflageflächen 4, 5 gehen entlang der Außenränder des Profils 3 in nicht zu scharfkantigen Winkeln in Außenwände 10, 11 über, die die Höhe H des Profils 3 bestimmen. Die Außenwände 10, 11 sind an ihrem unteren Rand mit einer Umbördelung 12 versehen, mit der das Profil 3 im Bereich seiner Enden auf der Auflage 2 der Traverse 1 aufliegt. Die Außenwände 10, 11 verlaufen im rechten Winkel zu den Auflageflächen 4, 5.

Über eine ebenfalls nicht zu scharfkantige Biegung 13 gehen die Auflageflächen 4, 5 in vertikale Seitenwände 14, 15 des Kanals 6 über. Der Kanal 6 wird daher beidseits durch die Seitenwände 14, 15 und entlang seines tiefstgelegenen Querschnitts durch einen flachen Boden 16 begrenzt, und ist insgesamt von im wesentlichen rechteckigem Querschnitt. Die durch die Lage des Bodens 16 bestimmte Tiefe des Kanals 6 ist gleich der Höhe der Außenwände 10, 11 und damit gleich der Höhe H des Profils 3, so daß das Profil 3 nicht nur mit den beiden Umbördelungen 12, sondern auch mit dem Boden 16 des Kanals 6 auf den Auflagen 2 der Traversen 1 aufliegt. Es ergibt sich somit eine günstige Lastabstützung im Bereich der Enden des Profils 3, und ferner infolge der überwiegend rechtwinkligen Anordnung der einzelnen Flächen zueinander eine hohe Biegefestigkeit des Profils.

Der Kanal 6 ist mit Öffnungen 17 in der Mitte seines Bodens 16 sowie mit zusätzlichen Öffnungen 18 in beiden Seitenwänden 14, 15 versehen. Um das Profil 3 so gering wie möglich zu schwächen, befinden sich die Öffnungen 17, 18 jeweils in der Mitte des Bodens 16 bzw. der Seitenwände 14, 15, so daß der im wesentlichen rechteckige Übergang 19 zwischen den Seitenwänden und dem Boden frei von Öffnungen ist. Die Öffnungen 17, zusätzlichen Öffnungen 18 sowie auch die weiteren Öffnungen 9 in den Auflageflächen 4, 5 weisen allesamt dieselbe Länge auf und erstrecken sich, in axialer Richtung betrachtet, abschnittsweise auf derselben Höhe. Hierdurch wird die Herstellung des Profils vereinfacht.

Im Brandfall ist über den Kanal 6 und dessen Öffnungen 17, 18 ein zügiges Abfließen von Löschwasser möglich, ohne daß durch die so gestalteten Durchtrittsquerschnitte eine ins Gewicht fallende Schwächung des Fachbodens eintritt. Scharfkantige Übergänge werden vermieden, so daß sich Waren relativ reibungsarm auf dem Fachboden verschieden lassen. Für einen optimalen Abfluß von Löschwasser beträgt die Breite b des Kanals 6 20 bis 33 % der Breite B des Profils.

### Bezugszeichenliste

- 1: Traverse
- 2: Auflage
- 3: Profil
- 4: Auflagefläche
- 5: Auflagefläche
- 6: Kanal
- 7: Einsenkung
- 8: Boden der Einsenkung
- 9: Öffnung
- 10: Außenwand
- 11: Außenwand
- 12: Umbördelung
- 13: Biegung
- 14: Seitenwand
- 15: Seitenwand
- 16: Boden
- 17: Öffnung
- 18: zusätzliche Öffnung
- 19: Übergang

- T: Tiefe der Einsenkung
- H: Höhe des Profils
- b: Breite des Kanals
- B: Breite des Profils

## Patentansprüche

1. Fachboden für Lager- oder Kommissionierregale, bestehend aus horizontalen Traversen (1), an denen Auflagen (2) für parallel zueinander angeordnete, vorzugsweise aus Metall bestehende Profile (3) ausgebildet sind, die gleichartig gestaltet sind mit jeweils mindestens zwei in einer gemeinsamen Ebene angeordneten Auflageflächen (4, 5) sowie einem zwischen den Auflageflächen (4, 5) angeordneten und diesen gegenüber abgesenkten Kanal (6), der entlang seines tiefstgelegenen Querschnitts mit regelmäßig verteilten Öffnungen (17) versehen ist,
**dadurch gekennzeichnet,**
**daß** zumindest eine der beiden Auflageflächen (4 bzw. 5) zweigeteilt mit einer dazwischen angeordneten Einsenkung (7) geformt ist, und die Einsenkung (7) entlang ihres Bodens (8) mit Öffnungen (9) versehen ist, wobei die Einsenkung (7) eine relativ geringe Tiefe (T) hat, die ein Viertel der Höhe (H) des Profils (3) nicht übersteigt.

2. Fachboden nach Anspruch 1, **dadurch gekennzeichnet, daß** sich zusätzliche Öffnungen (18) in Seitenwänden (14, 15) des Kanals (6) befinden, die den tiefstgelegenen Querschnitt des Kanals (6) mit den Auflageflächen (4, 5) verbinden.

3. Fachboden nach Anspruch 1 oder Anspruch 2, **dadurch gekennzeichnet, daß** der Kanal (6) im Querschnitt rechteckig gestaltet ist, und sich die Öffnungen (17) im Boden (16) des Kanals (6), und die zusätzlichen Öffnungen (18) in den vertikalen Seitenwänden (14, 15) des Kanals (6) befinden.

4. Fachboden nach Anspruch 2 oder Anspruch 3, **dadurch gekennzeichnet, daß** die summierten Durchtrittsflächen von Öffnungen (17) und zusätzlichen Öffnungen (18) mindestens 50 % jener Fläche betragen, die der Kanal (6) in Draufsicht betrachtet, einnimmt.

5. Fachboden nach Anspruch 3, **dadurch gekennzeichnet, daß** die im wesentlichen rechtwinkligen Übergänge (19) zwischen dem Boden (16) des Kanals (6) und dessen Seitenwänden (14, 15) frei von Öffnungen sind.

6. Fachboden nach einem der Ansprüche 1 bis 5, **dadurch gekennzeichnet, daß** die Breite b des Kanals (6) 20 bis 33 % der Breite B des Profils (3) beträgt.

7. Fachboden nach Anspruch 1, **dadurch gekennzeichnet, daß** die Einsenkung (7) die Auflagefläche (4 bzw. 5) in zwei gleich große Flächen unterteilt.

8. Fachboden nach einem der Ansprüche 1 bis 7, **dadurch gekennzeichnet, daß** die Auflageflächen (4, 5), mit Ausnahme der Einsenkung (7), keine Öffnungen aufweisen.

9. Fachboden nach einem der Ansprüche 2 bis 8, **dadurch gekennzeichnet, daß** sämtliche Öffnungen (9, 17, 18) dieselbe Länge aufweisen, und sich, in axialer Richtung betrachtet, abschnittsweise auf derselben Höhe erstrecken.

## Claims

1. Shelf for storage or order-picking racks, comprising horizontal crossmembers (1) on which there are formed rests (2) for profiles (3) which are arranged parallel to one another, consist preferably of metal and are of the same configuration with in each case at least two bearing surfaces (4, 5) arranged in a common plane, and also comprising a channel (6) which is arranged between the bearing surfaces (4, 5), is lower than the latter and is provided with regularly distributed openings (17) along its lowest-level cross section, **characterized in that** at least one of the two bearing surfaces (4 and 5) is divided in two with a depression (7) arranged in between, and the depression (7) is provided with openings (9) along its base (8), the depression (7) having a relatively small depth (T) which does not exceed a quarter of the height (H) of the profile (3).

2. Shelf according to Claim 1, **characterized in that** additional openings (18) are located in side walls (14, 15) of the channel (6), which connect the lowest-level cross section of the channel (6) to the bearing surfaces (4, 5).

3. Shelf according to Claim 1 or 2, **characterized in that** the channel (6) is of rectangular configuration in cross section, and the openings (17) are located in the base (16) of the channel (6) and the additional openings (18) are located in the vertical side walls (14, 15) of the channel (6).

4. Shelf according to Claim 2 or Claim 3, **characterized in that** the sum of the through-passage surface areas of openings (17) and additional openings (18) is at least 50% of that surface area which is taken up by the channel (6), as seen in plan view.

5. Shelf according to Claim 3, **characterized in that** the essentially right-angled transitions (19) between the base (16) of the channel (6) and the side walls (14, 15) of the latter are free of openings.

6. Shelf according to one of Claims 1 to 5, **characterized in that** the width b of the channel (6) is from 20 to 33% of the width B of the profile (3).

7. Shelf according to Claim 1, **characterized in that** the depression (7) subdivides the bearing surface (4, 5) into two surfaces of equal size.

8. Shelf according to one of Claims 1 to 7, **characterized in that**, with the exception of the depression (7), the bearing surfaces (4, 5) do not have any openings.

9. Shelf according to one of Claims 2 to 8, **characterized in that**, all of the openings (9, 17, 18) are of the same length and extend to the same height in certain sections, as seen in the axial direction.

## Revendications

1. Fond de compartiment destiné à des rayonnages de stockage ou de préparation de commandes, constitué de traverses horizontales (1) sur lesquelles sont formés des appuis (2) pour des profilés (3), de préférence en métal, disposés parallèlement les uns par rapport aux autres, qui sont agencés de façon identique et qui comportent chacun au moins deux surfaces d'appui (4, 5) disposées dans un plan commun, ainsi qu'un canal (6) disposé entre les surfaces d'appui (4, 5) et surbaissé par rapport à ces dernières, qui est muni d'orifices (17) répartis régulièrement le long de sa section transversale située au point le plus bas,
**caractérisé en ce que**
l'une au moins des deux surfaces d'appui (4 ou 5) est subdivisée en deux parties entre lesquelles est formé un renfoncement (7), et **en ce que** le renfoncement (7) est muni d'orifices (9) le long de son fond (8), le renfoncement (7) ayant une profondeur (T) relativement faible qui ne dépasse pas un quart de la hauteur (H) du profilé (3).

2. Fond de compartiment selon la revendication 1, **caractérisé en ce que** des orifices supplémentaires (18) sont prévus dans des parois latérales (14, 15) du canal (6), qui relient la section transversale située au point le plus bas du canal (6) aux surfaces d'appui (4, 5).

3. Fond de compartiment selon la revendication 1 ou la revendication 2, **caractérisé en ce que** le canal (6) est réalisé avec une section transversale rectangulaire, et **en ce que** les orifices (17) sont pratiqués dans le fond (16) du canal (6), et les orifices supplémentaires (18) dans les parois latérales verticales (14, 15) du canal (6).

4. Fond de compartiment selon la revendication 2 ou la revendication 3, **caractérisé en ce que** les surfaces de passage cumulées d'orifices (17) et d'orifices supplémentaires (18) sont de préférence au moins égales à 50 % de la surface que le canal (6) occupe considéré en vue de dessus.

5. Fond de compartiment selon la revendication 3, **caractérisé en ce que** les transitions (19) sensiblement à angles droits entre le fond (16) du canal (6) et ses parois latérales (14, 15) ne comportent pas d'orifices.

6. Fond de compartiment selon l'une quelconque des revendications 1 à 5, **caractérisé en ce que** la largeur b du canal (6) est de 20 à 33 % égale à la largeur B du profilé (3).

7. Fond de compartiment selon la revendication 1, **caractérisé en ce que** le renfoncement (7) subdivise la surface d'appui (4 ou 5) en deux surfaces de même grandeur.

8. Fond de compartiment selon l'une quelconque des revendications 1 à 7, **caractérisé en ce que**, à l'exception du renfoncement (7), les surfaces d'appui (4, 5) ne comportent par d'orifices.

9. Fond de compartiment selon l'une quelconque des revendications 2 à 8, **caractérisé en ce que** tous les orifices (9, 17, 18) ont la même longueur et, considérés dans la direction axiale, s'étendent par sections à la même hauteur.
